# EUROPÄISCHE PATENTSCHRIFT

(11) **EP 3 346 805 B1**
(45) Veröffentlichungstag und Bekanntmachung des Hinweises auf die Patenterteilung: **12.02.2020**
(21) Anmeldenummer: 18152507.2
(22) Anmeldetag: 16.04.2012
(51) Int. Cl.: H05B 37/02

(54) **LEUCHTE SOWIE ADAPTER UND NETZWERK ZUR DRAHTLOSEN LEUCHTENSTEUERUNG**
LUMINAIRE, ADAPTER AND NETWORK FOR WIRELESS LIGHTING CONTROL
LUMINAIRE, ADAPTATEUR ET RÉSEAU POUR UNE COMMANDE SANS FIL DE LA LUMIÈRE

(30) Priorität: 14.04.2011 DE 102011007416
(43) Veröffentlichungstag der Anmeldung: 11.07.2018
(62) Teilanmeldung aus: 12164306.8
(73) Patentinhaber: Trilux GmbH & Co. KG, 59759 Arnsberg (DE)
(72) Erfinder: BUSCH, Ralf, 59759 Arnsberg (DE); HEINZE, Robert, 59423 Unna (DE)
(74) Vertreter: Lippert Stachow Patentanwälte Rechtsanwälte

(56) Entgegenhaltungen:
- EP-A1- 2 395 816
- EP-A2- 1 940 203
- US-A1- 2006 148 481

## Beschreibung

Die Erfindung betrifft allgemein die Steuerung von Leuchten und insbesondere einen Adapter hierfür. Die Erfindung betrifft ferner eine Leuchte mit entsprechendem Adapter.

Lichtanlagen verfügen heutzutage meist über ein Steuerungssystem das sich zur Gebäudeautomatisierung eignet. Bekannt sind in der Beleuchtungs-Industrie beispielsweise der EIB/KNX Standard oder der LON Feldbus. Sehr weit verbreitet ist jedoch inzwischen die DALI (Digital Addressable Lighting Interface) Schnittstelle als Quasi-Standard. Inzwischen sind fast alle Leuchten im gewerblichen Bereich und insbesondere dimmbare Leuchtstoff-Leuchten auch im privaten Bereich DALI kompatibel. Ein DALI-System ist beispielsweise in der Patentanmeldung EP 1643815 beschrieben.

In der Regel erfolgt die Steuerung der Leuchten noch über wandmontierte, konventionelle Schalter, wobei Schalter und Leuchten als Betriebsgeräte ("DALI-Slave") über ein DALI Steuerungsgerät ("DALI-Controller" (Master), auch "DALI-Gateway") verbunden sind. Die Steuerungsgeräte werden bei der Einrichtung der Anlage entsprechend der Ausgestaltung der Lichtanlage, der gewünschten Leuchtgruppen und der Licht-Szenarien programmiert, beispielsweise über einen TCP/IP Anschluss mittels eines im Steuerungsgerät integrierten Webserver. Unter Hinzufügung eines separaten WLAN-Routers ist es auch möglich, die Programmierung bei der Inbetriebnahme kabellos auszuführen. Hierzu eignet sich beispielsweise das Steuergerät "DaliControl SC64 IP" der Fa. IPAS GmbH, D-47057 Duisburg. Aufgrund unterschiedlicher Einzelkomponenten, uneinheitlicher und herstellerspezifischer Schnittstellen, und nicht zuletzt hoher Kosten, eignen sich diese eher für die Einbindung in gebäudetechnische Steueranlagen ausgelegte Steuerungsgeräte, nicht aber für eine bequeme und kostengünstige Fernbedienung einer oder mehrerer einzelner Leuchten.

Bekannt sind zur bequemeren Bedienung auch bereits speziell für DALI entwickelte Dimmschnittstellen-Adapter, die nebst Taster auch über eine Infrarot-Fernbedienung bedient werden können. Solche Adapter werden beispielsweise unter dem Handelsnamen "Lightgate basic" und "Lightgate plus" von der Fa. BAG electronics Group, 59759 Arnsberg angeboten.

Bekannt ist beispielsweise aus dem Gebrauchsmuster DE 29806094 U1 ein von der Anmelderin entwickeltes praktisches Beleuchtungssystem zur Funkfernbedienung mehrerer unterschiedlicher Leuchten mittels einer gemeinsamen Funkfernbedienung. Dieses System birgt zwar nicht die oben genannten Nachteile, ist jedoch als älteres System noch nicht DALIfähig.

Die Patentanmeldung EP 2 395 816 A1 (die zum Stand der Technik gemäß Artikel 54 (3) EPÜ gehört) offenbart eine Beleuchtungsvorrichtung mit mindestens einer Leuchte, mit einer Steuerungseinrichtung und einer WLAN-Schnittstelle die als Server bedient.

Ein drahtloses Kommunikationssystem zur Erleichterung der drahtlosen Kommunikation zwischen Komponenten einer Fertigungsanlage oder eines Fertigungssystems ist aus der Patentanmeldung EP 1 940 203 A2 bekannt.

Die Patentanmeldung EP 1 940 203 A2 offenbart ein drahtloses Kommunikationssystem zur Erleichterung der drahtlosen Kommunikation zwischen Komponenten einer Fertigungsanlage oder eines Fertigungssystems. Das Kommunikationssystem fasst mehreren Modulen um, die jeweils einen Webserver enthalten. Zweckbestimmte Fernbedienungen können direkt mit einem geeigneten Steuerungsgerät kommunizieren. Bei neuer Funktionszuweisung oder der Verwendung einer neuen oder zusätzlichen Funkfernbedienung muss allerdings in der Regel ein recht umständliches "Einlernverfahren" vom Benutzer durchgeführt werden. Außerdem ist eine spezielle Fernbedienung erforderlich, so dass sich unterschiedliche Fernbedienungen häufen. Dies ist allgemein unerwünscht.

Eine Lösung zur Fernbedienung einer haustechnischen Lichtanlage ohne spezielle Funkfernbedienung ist aus der DE 10 2004 030 844 bekannt. Hierin wird vorgeschlagen, anhand eines Personal Digital Assistant (PDA) über eine drahtlose Schnittstelle eines Empfängers die Steuerung zu realisieren. Der entsprechende Empfänger kann gemäß DE 10 2004 030 844 Infrarot- oder Blue-Tooth-fähig sein und ist entweder als separates Anbauteil mit einer DALI Leuchtensteuerung verbunden, oder wird unmittelbar in ein elektronisches Vorschaltgerät (EVG) einer Leuchte integriert. Der erstgenannte Ansatz verursacht offensichtlich zusätzliche Ausrüstungs- und Installationskosten gegenüber herkömmlichen Steuerungen. Der zweite Ansatz bietet hingegen wenig Flexibilität bei der Systemgestaltung und erfordert für jede Leuchte eine separate Bedienung. Vor allem aber ist die vorgeschlagene Steuerung nicht ohne weiteres einem beliebigen Benutzerkreis zugänglich. Es muss jeweils eine mit dem speziellen Empfänger kompatible Steuerungs-Software auf jedem zu verwendenden PDA installiert werden. Der Ansatz gemäß DE 10 2004 030 844 eignet sich demnach eventuell für private Haustechnik, nicht hingegen für Großanlagen, etwa in öffentlichen Gebäuden.

Trotz dieser vielfältigen Ansätze ist mithin bis heute keine bequeme und kostengünstige Lösung zur Leuchtenbedienung bekannt.

Der vorliegenden Erfindung liegt somit zunächst die technische Aufgabe zugrunde, die bequemere Bedienung einer oder mehrerer Leuchten zu ermöglichen. Zudem soll die Bedienung auf kostengünstige Weise ermöglicht werden.

Diese und andere Aufgaben werden durch eine Leuchte mit Adapter gemäß den Merkmalen des Anspruchs 1 bzw. durch einen Adapter an sich nach Anspruch 6 gelöst.

Ein erfindungsgemäßer Adapter für eine Leuchte umfasst ein im Adapter eingebettetes (in das Gerät integrierte) Funknetzwerkmodul, nämlich ein WPAN-Modul, zur drahtlosen Kommunikation gemäß IEEE 802.15, insbesondere ein sogenanntes Bluetooth-Modul. Die Kommunikation kann über eine integrierte oder extern angeschlossene Funkantenne erfolgen. Weiterhin umfasst der erfindungsgemäße Adapter eine im Adapter eingebettete Recheneinheit zur Leuchtensteuerung gemäß einer standardisierten Automatisierungsschnittstelle, beispielsweise einen hierzu programmierten Mikroprozessor. Die Recheneinheit ist insbesondere gemäß DALI programmiert, d.h. zur Bereitstellung einer Schnittstelle zu DALI-kompatiblen Betriebsgeräten. Ferner umfasst der Adapter einen integrierten Server zur Bereitstellung einer Benutzerschnittstelle über Funk. Die elektrische Steuerung erfolgt über den DALI-Bus anhand eines elektrischen Anschlusses, der hierzu im Adapter vorgesehen ist. Erfindungsgemäß sind Recheneinheit und Server derart programmiert, dass die Leuchte anhand der Benutzerschnittstelle, beispielsweise durch ein WPAN-fähiges Smartphone, über Funk fernbedienbar ist. Der Server ist hierbei als Softwarekomponente zu verstehen und kann hierbei beliebig in den Adapter integriert sein, der Server kann beispielsweise durch die Recheneinheit implementiert werden. Der Server kann auch durch ein, eventuell von der Recheneinheit physikalisch getrenntes Funk-Netzwerkmodul, realisiert sein.

Zusammenfassend und abstrahierend besteht die erfindungsgemäße Lösung also im Wesentlichen aus einem Adapter "Funknetzwerk-zu-Leuchtenschnittstelle", welcher eine direkte und einfache Ansteuerung beispielsweise über Funk und DALI ermöglicht. So kann die Leuchte mit jedem gängigen Gerät, z.B. einem sogenannten Smartphone (Mobiltelefon mit Zusatzfunktionen), bedient werden das WPAN-fähig (Wireless Personal Area Network) ist, insbesondere gemäß IEEE 802.15 oder Bluetooth®. Der erfindungsgemäße Adapter umfasst neben einer gängigen Funkschnittstelle eine DALI-Steuereinheit und hiermit verbunden einen Server, welcher über eine für den Adapter entwickelte Anwendung, beispielsweise eine APP (Applikation) für das gewünschte Smartphone, eine Benutzerschnittstelle zur Verfügung stellt. Die Benutzerschnittstelle ist unabhängig vom Endgerät und somit über jedes handelsübliche Gerät gemäß IEEE 802.15 oder Bluetooth® - bedienbar. Der Adapter ist auch zum Einbau unmittelbar in ein Leuchtengehäuse, beispielsweise einer Hängeleuchte oder einer Standleuchte, geeignet, wodurch auch bei geringer Leistung inhärent gute Signalstärke gewährleistet werden kann.

Durch den Adapter gemäß der Erfindung kann man Leuchten direkt und einfach beispielsweise mit einem Smartphone oder einem Netbook ansteuern. Ein wesentlicher Vorteil liegt demnach in der Ausnutzung der heutzutage allgegenwärtig vorhandenen tragbaren Geräte zur Leuchtensteuerung, insbesondere Smartphones oder Netbooks. Hierdurch erübrigen sich spezielle bzw. zusätzliche Funk-Fernbedienungen. Außerdem können mehrere und unterschiedliche Benutzer die gewünschte Leuchte mit ihrem eigenen Gerät bedienen oder beispielsweise nach Wunsch konfigurieren.

In einer alternativen, hier nicht beanspruchten Ausführungsform nach dem Stammpatent EP 2 512 209 B1 umfasst der Adapter ein Funknetzwerkmodul, das als WLAN-Modul, vorzugsweise als WLAN-Accesspoint gemäß IEEE 802.11 Standard ausgebildet ist. In dieser, hier nicht beanspruchten Ausführungsform ist der Server vorzugsweise zur Kommunikation mit einem Internet-Browser, insbesondere als HTTP-Webserver, ausgebildet.

In einer bevorzugten Ausführungsform der hier beanspruchten Erfindung ist das Funknetzwerkmodul bzw. WPAN-Modul als Bluetooth-Accesspoint gemäß IEEE 802.15 Standard ausgebildet. In dieser Ausführungsform ist der Server vorzugsweise zur Kommunikation mit einer adapterspezifisch programmierten Anwendung, insbesondere einer Smartphone-Anwendung (APP) ausgestattet. Trotz geringerer Reichweite im Vergleich zu WLAN-Modulen ist ein WPAN-Modul besonders geeignet für eine kostensparende Ausführung auch in Verbindung mit einer herstellerspezifischen und Smartphone-geeigneten Anwendung (APP).

In einer einfachen und günstigen Ausführung ist die Recheneinheit und damit der Adapter zur Steuerung eines einzigen DALI-Betriebsgerätes, d.h. einer Leuchte, ausgestaltet. Die Recheneinheit ist vorzugsweise jedoch als DALI-Steuergerät bzw. DALI-Gateway, insbesondere gemäß IEC 62386 Standard programmiert. Hierdurch wird die Steuerung einer Vielzahl von Betriebsgeräten ermöglicht.

Neben den für den DALI-Bus geeigneten elektrischen Anschlüssen umfasst der erfindungsgemäße Adapter vorzugsweise eine Anschlussklemme mit Anschlüssen für weitere elektrische Geräte, insbesondere Taster und/oder Sensoren zur Steuerung der Leuchte, oder auch zur Spannungsversorgung des Adapters und seiner Module. Ein optionaler Tasteranschluss ermöglicht insbesondere die manuelle Bedienung ohne WPAN-fähiges Gerät. Es kann auch ein Anschluss für einen zusätzlichen Präsenzmelder, beispielsweise einen IR- oder HF- Präsenzmelder vorgesehen sein.

Bei einer Ausführung des Adapters mit einem Sensoranschluss sieht die Erfindung vorzugsweise vor, dass die Recheneinheit so programmiert ist, dass ein Stellwert zur Helligkeitsregelung der Leuchte berechnet wird. Die Berechnung kann ausgehend von Messwerten, d. h. durch einen externen Lichtsensor ermittelten Ist-Werten, und von über die Benutzerschnittstelle vorgebbaren Soll-Werten erfolgen. Die Recheneinheit gibt dann über die Automatisierungsschnittstelle den berechneten Stellwert als Steuerbefehl an die Leuchte aus.

In einer weiteren bevorzugten Ausführungsform ist die Recheneinheit sowohl zur Leuchtensteuerung gemäß Datenschnittstelle als auch zur Bereitstellung des Servers programmiert. Der Server kann hingegen auch im eigentlichen Funknetzwerkmodul integriert sein. Hierdurch können entsprechende, bereits handelsüblich erhältliche Komponenten verwendet werden.

Ein besonderer Vorteil des erfindungsgemäßen Adapters liegt darin, dass er einfach in das Leuchtengehäuse einer Leuchte integriert werden kann. Hierzu hat der Adapter vorzugsweise ein Adaptergehäuse mit verhältnismäßig kleinen Abmessungen. Bevorzugte Abmessungen in Höhe x Breite x Länge sind vorzugsweise ≤ 25mm x 36mm x 100mm. Durch die Integration in das Leuchtengehäuse können auch Funknetzwerkmodule mit geringer Reichweite ohne Weiteres angesteuert werden.

Zur elektrischen Ansteuerung der Leuchte ist der Adapter vorzugsweise mit den Anschlüssen zur Leuchtensteuerung an ein typischerweise in der Leuchte vorgesehenes Schalt/Steuergerät verbunden, insbesondere mit einem elektronischen Vorschaltgerät.

Ein erfindungsgemäßer Adapter kann in eine Innenraumleuchte, beispielsweise eine Hänge-, Deckeneinbau-, Deckenanbau-, Wandanbau-, oder Wandeinbauleuchte eingesetzt werden. Der erfindungsgemäße Adapter kann allerdings auch in eine Außenleuchte eingesetzt werden. Unabhängig vom Typ der Leuchte erlaubt es der erfindungsgemäße Adapter, Leuchten direkt und einfach mit einem Smartphone oder einem Notebook oder ähnlichen Geräten anzusteuern. So können Leuchtensteuerungen für tragbare Endgeräte auf kostengünstige Weise angeboten werden. Aufgrund der weiten Verbreitung von Smartphones, Netbooks oder Notebooks erübrigt sich die Verwendung von speziell hergestellten Funkfernbedienungen.

Die Leuchte mit integriertem Adapter ist ebenfalls Gegenstand der Erfindung. Diese kann anhand des Adapters direkt über ein geeignetes Funknetzwerk bedient werden. Hierzu wird keine zusätzliche Software und - abgesehen vom Adapter - keine zusätzliche Hardware benötigt. Die Kompatibilität mit dem tragbaren Endgerät wird durch die Verwendung einer für den Benutzer leicht zu beschaffenden APP sichergestellt.

Hierbei können Informationen über die Leuchte, beispielsweise Zustandsinformationen und Bedienmöglichkeiten sowie die möglichen Bedienungsfunktionen durch den Server über Funk an das Endgerät übertragen werden. So kann neben dem Ein- und Ausschalten oder dem Dimmen der Leuchte vorgesehen sein, die Leuchte in ihren Grundfunktionen, wie Schalten und Dimmen oder aber in einer Sollwert-Einstellung für eine Tageslicht-Konstantlichtregelung zu programmieren.

Da der Adapter eine einfache und direkte Bedienung von Leuchten anhand handelsüblicher und weit verbreiteter, tragbarer Geräte ermöglicht, wird die Bedienung deutlich bequemer und auf eine kostengünstige Weise ermöglicht.

Die Erfindung betrifft auch die Verwendung des vorgeschlagenen Adapters zum Fernbedienen einer Leuchte mittels eines tragbaren Funknetzwerk-Endgeräts, beispielsweise mittels eines Smartphones.

Ferner betrifft die Erfindung auch ein Netzwerk zur Steuerung mehrerer bzw. einer Vielzahl von Leuchten anhand von mindestens zwei Adaptern der vorgeschlagenen Art. Es können somit eine Vielzahl von Leuchten anhand eines handelsüblichen tragbaren Funknetzwerk-Endgeräts gesteuert werden.

Schließlich betrifft die Erfindung auch ein Verfahren zur Steuerung mehrerer Leuchten in einem Steuerungsnetzwerk mit mindestens zwei Adaptern. Die erfindungsgemäße Gestaltung der Adapter ermöglicht die drahtlose bzw. kabellose Übertragung lichttechnischer Steuerinformationen, nämlich über die jeweiligen Funk-Netzwerkmodule der Adapter. So können größere Steuernetzwerke mit geringerem Material- und Installationsaufwand realisiert werden.

Weitere Einzelheiten, Vorteile und Merkmale der Erfindung lassen sich dem nachfolgenden Teil der Beschreibung entnehmen, in dem Ausführungsbeispiele der erfindungsgemäßen Vorrichtung anhand von zwei Zeichnungen näher erläutert sind.

Es zeigen:
- Fig. 1:: ein schematisches Blockschaltbild eines nicht erfindungsgemäß ausgebildeten Adapters zur Steuerung einer Leuchte gemäß dem Stammpatent;
- Fig. 2:: ein schematisches Blockschaltbild eines erfindungsgemäß ausgebildeten Adapters zur Steuerung einer Leuchte gemäß einem zweiten Ausführungsbeispiel; und
- Fig.3:: eine rein beispielhafte Anordnung mehrerer unterschiedlicher Leuchten in einem Netzwerk zur Steuerung der Leuchten anhand von WLAN- oder WPAN-fähigen Endgeräten

Teile gleicher Struktur oder gleicher Wirkung sind mit gleichen oder zahlenmäßig um Hundert erhöhten Bezugszeichen versehen. Es sind in den Figuren nur für das Verständnis wesentliche Teile dargestellt, wobei übrige Teile, beispielsweise Details der Leuchte, nicht gezeigt sind.

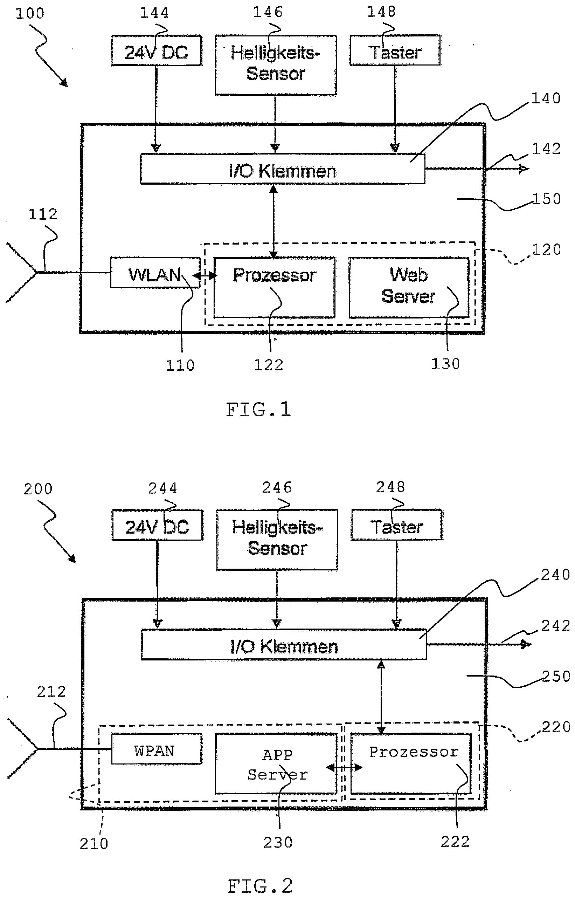

In Fig. 1 zeigt ein erstes Ausführungsbeispiel eines Adapters, allgemein mit Bezugszeichen 100 bezeichnet. Der Adapter 100 umfasst ein eingebettetes, d.h. in den Adapter 100 als elektronische Komponente integriertes Funk-Netzwerkmodul 110, welches als WLAN-Modul ausgebildet ist. Das WLAN-Modul 110 dient zur drahtlosen Kommunikation mit einem Benutzerendgerät. Hierzu verfügt der Adapter 100 über eine integrierte oder extern an den Adapter 100 angeschlossene Funkantenne 112. Im Adapter 100 ist eine Recheneinheit 120 eingebettet, d.h. als elektronische Komponente vorgesehen. Das WLAN-Modul 110 kann, wie in Fig.1 gezeigt separat, oder als Bestandteil der Recheneinheit 120 ausgeführt sein. Die Recheneinheit 120 umfasst einen Mikroprozessor 122, welcher zur Steuerung einer nicht in Fig. 1 gezeigten Leuchte programmiert ist. Der Mikroprozessor 122 ist gemäß einer gängigen, standardisierten Automatisierungsschnittstelle programmiert, vorzugsweise gemäß DALI. Im Ausführungsbeispiel nach Fig. 1 implementiert die Recheneinheit 120 weiterhin einen Server 130 zur Bereitstellung einer Benutzerschnittstelle über Funk, d.h. über das WLAN-Modul 110. Der Server 130 ist somit als Softwarekomponente in den Adapter 100 integriert. Der Server 130 in Fig. 1 ist als HTTP-Server ausgestaltet. Hierdurch kann der Adapter 100 über das WLAN-Modul 110 eine Benutzerschnittstelle, beispielsweise in HTML-Format, zur Verfügung stellen. Auf diese Benutzerschnittstelle kann mit jedem handelsüblichen WLAN-Endgerät, beispielsweise einem Smartphone, einem Netbook oder einem tragbaren PC (Notebook) zugegriffen werden. Anhand des erfindungsgemäßen Adapters 100 kann somit eine Leuchte direkt über WLAN angesprochen werden. Zudem stellt mittels des Servers 130 die Leuchte selbst eine Benutzerschnittstelle zur Verfügung, die mit gängigen Endgeräten kompatibel ist. Durch die Verwendung eines gängigen Standards wie beispielsweise HTML kann das Endgerät auf einfache Art und Weise an der Leuchte angemeldet werden. Der Server 130 kann hierdurch alle relevanten Informationen, beispielsweise Funktionen der Leuchte, an das Endgerät übermitteln. So kann beispielsweise über eine durch den Server 130 generierte HTML-Seite das Ein- und Ausschalten oder aber das Dimmen der Leuchte erfolgen. In der Ausführungsform des Adapters 100 nach Fig. 1 ist somit zur Fernbedienung einer Leuchte keine spezielle Software auf dem Endgerät erforderlich.

Zur elektrischen Ansteuerung der Leuchte umfasst der Adapter 100, wie in Fig. 1 ersichtlich, Anschlüsse 140, beispielsweise eine Gruppe von Eingangs-/Ausgangs-Anschlussklemmen. Hieran kann insbesondere die 2-adrige elektrische Leitung des DALI-Bus 142 angeschlossen werden. Ferner erfolgt über die Anschlussklemmen 140 der Anschluss einer Spannungsversorgung 144, eines Tasters 148 und vorzugsweise eines zusätzlichen Helligkeitssensors 146. Somit ist auch vorgesehen, über einen üblichen Taster 148 die Grundfunktionen der Leuchte zu betätigen. Bei Verwendung eines Helligkeitssensors 146 kann ferner über die Recheneinheit 120 eine Tageslicht-Konstantlicht-Regelung vorgesehen sein. Die gewünschte Sollwert-Einstellung hierfür kann über die vorgenannte Benutzerschnittstelle, d.h. anhand des WLAN-Moduls 110 und des Servers 130, eingestellt werden. Die erforderliche Helligkeitsregelung kann als Software ebenfalls in der Recheneinheit 120 implementiert sein. Die Recheneinheit 120 ist somit zur Berechnung des Stellwerts für die Helligkeitsregelung programmiert. Hierzu verwendet die Recheneinheit den erfassten Messwert, d.h. Istwert, welcher durch den Lichtsensor 146 gemessen wurde. Die Recheneinheit 120 berechnet dann aufgrund dieses Istwerts und des über die Benutzerschnittstelle via das WLAN-Modul 110 und den Server 130 eingestellten Sollwerts, den Stellwert. Den berechneten Stellwert gibt die Recheneinheit 120 als Steuerbefehl an den DALI-Bus 142 aus. Entsprechend regelt der Adapter 100 eine konstante Helligkeit auch bei variablem Tageslichteinfall im Erfassungsbereich des Helligkeitssensors 146. Im Betrieb hat die Konstantlicht-Regelung Vorrang. Alternativ kann die Regelung auch ausgesetzt werden sobald der Benutzer manuell die Leuchte bedient und bspw. erst fortgeführt werden, wenn eine Entsprechende Eingabe durch den Benutzer erfolgt. Neben der elektrischen bzw. datentechnischen Steuerung der Anschlüsse 140 steuert die Recheneinheit 120 auch die Kommunikation zwischen WLAN-Modul 110, Server 130 und dem DALI-Bus 142.

Das WLAN-Modul 110 kann als einfacher WLAN-Netzknoten ausgestaltet sein. Das WLAN-Modul 110 kann jedoch als WLAN Access Point gemäß IEEE 802.11 Standard ausgestattet, und ggf. über einen entsprechenden Netwerkanschluss einen Internet-Zugang bereitstellen. In Verbindung mit einem entsprechenden WLAN-Modul 110 ist der Server 130 vorzugsweise zur Kommunikation mit gängigen Internet-Browsern ausgebildet. Typischerweise ist der Server 130 somit ein HTTP-Webserver. Hierdurch wird in der Ausführungsform des Adapters 100 nach Fig. 1 auch ein einfacher Zugang auf die DALI-Lichtsteuerungs-Schnittstelle über HTML ermöglicht. Neben der eigentlichen Bedienung der Leuchte kann auch die Einstellung des Adapters 100 bzw. des WLAN-Zugangs ebenfalls über das WLAN-Modul 110 und den HTTP-Server 130 erfolgen. Auch ermöglicht es die beschriebene Ausführung des Adapters 100, angezeigte HTML-Seiten der Benutzerschnittstelle nach Wunsch, beispielsweise herstellerspezifisch, veränderbar auszuführen. So können durch einfache Änderung der Programmierung der Recheneinheit 120 bzw. des Servers 130 beispielsweise Änderungen im Erscheinungsbild, in der Bedienbarkeit oder auch im Funktionsumfang erzielt werden.

In einer günstigen Ausführung nach FIG.1 verfügt jeder WLAN-DALI Adapter 100, genauer jedes WLAN-Modul 110, demnach über eine eigene feste MAC Adresse und kann vom übergeordneten IP-Netzwerk eine zugewiesene individuelle IP Adresse erhalten. Somit ist auch jede Leuchte individuell ansteuerbar. Die Leuchte kann im einfachsten Fall direkt über IP-Befehle oder, wie oben beschrieben, über eine per URL geöffnete "Webseite", bspw. in XHTML-Format, bedient werden, welche der HTTP-Server 130 generiert. Mittels Webseite kann die Bedienung durch die Recheneinheit 120 auf benutzerfreundliche Art erfolgen, wobei bspw. über einfache Button- und/oder Text-Felder die Helligkeit, AUS/EIN-Schalten, der Sollwert einer Helligkeitsregelung, sonstige grundlegende Einstellungen wie Zeitschaltung, etc. eingestellt werden. Durch die Webesite kann die Recheneinheit 120 auch den aktuellen Status (AUS/EIN, Dimmwert, Lampe defekt, etc.) anzeigen. Es können auch mehrere Nutzer gleichzeitig auf die gleiche Leuchte zugreifen über eine Webesite. Zur Kollisionsvermeidung kann der Adapter 100, insbesondere die Recheneinheit 120, so ausgeführt sein, dass immer der zuletzt eingegebene Wert gilt (LTP) und nach Aktualisierung der Webseite allen Nutzern angezeigt wird. Über Passwortschutz kann der Zugang auch für bestimmte Nutzer erlaubt bzw. verweigert werden. Diese kann ebenfalls benutzerfreundlich über die Webseite erfolgen, anhand eines anfänglich zugeteilten Systempassworts, ähnlich wie bei handelsüblichen WLAN-Routern. Tiefergehende Netzwerkschutzsysteme sind in der Regel nicht nötig, da die Leuchte bevorzugt nur Netzwerk Teilnehmer (client) ist und übergeordnete Schutzmechanismen des Netzes mitnutzt. Zum Betrieb ist der Adapter 100 in ein bestehendes LAN- oder WLAN-Netzwerk eingebunden, wenn er zur Kosteneinsparung keine Host-Funktionalität aufweist. Es ist auch möglich, dass der Adapter 100 selbst als WLAN-AccessPoint ausgeführt ist, oder mit einem zusätzlichen handelsüblichen WLAN-AccessPoint verbunden wird.

Fig. 2 zeigt eine erfindungsgemäße Ausführungsform eines Adapters, allgemein mit Bezugszeichen 200 bezeichnet. Im Folgenden werden nur die wesentlichen Unterschiede des Adapters 200 gegenüber der vorhergehenden Beschreibung erläutert. Im Adapter 200 ist die Funktion des Servers 230 in das Funknetzwerkmodul 210 integriert. Das Funknetzwerkmodul 210 ist als WPAN-Modul, insbesondere als Bluetooth® Access Point, gemäß IEEE 802.15 Standard ausgebildet.

Der APP-Server 230 ist entsprechend ausgestaltet zur Kommunikation mit einer Anwendung für Endgeräte, die spezifisch für den Adapter 200 entwickelt sind. Es handelt sich typischerweise um eine sogenannte Smartphone-Anwendung (APP). Die Antenne 212 für das WPAN-Modul 230 kann im Gehäuse 250 des Adapters 200 integriert sein oder aber extern angeschlossen sein. Die Recheneinheit 220, welche zur Kommunikation mit dem Funknetzwerkmodul 210 ausgebildet ist, umfasst einen Mikroprozessor 222. Der Mikroprozessor 222 ist gemäß DALI-Standard programmiert bzw. entworfen. Denkbar ist auch eine hier nicht gezeigte Ausführung, in welcher sowohl Funknetzwerkmodul 210 als auch Server 230 und DALI-Steuerung in eine einzige Recheneinheit integriert sind.

Im Gegensatz zur WLAN-Ausführung gemäß Fig. 1 ist die Bluetooth®-Ausführung gemäß Fig. 2 mit einer speziell für den Adapter 200 entwickelten Software-Anwendung, einer sogenannte APP, bedienbar. Diese kann in entsprechenden Versionen für diverse Endgeräte, beispielsweise Smartphones, dem Benutzer zur Verfügung gestellt werden, z.B. über Internet oder durch den Server 230 selbst. Die Ausführung des Adapters 200 nach Fig.2 ist weniger geeignet, einen Zugang zu einem WLAN-Netz, beispielsweise für den Internet-Zugriff, zur Verfügung zu stellen oder ein komplexes Netzwerk mit zu realisieren. Der Adapter 200 für Bluetooth® ist jedoch kostengünstiger ausführbar und durch die APP inhärent, u.a. mit größerer Zugriffssicherheit. In möglichen Funktionen und der bequemen Steuerung der Leuchte sind jedoch beide Ausführungen der Adapter 100, 200 nach Fig. 1 und Fig. 2 gleichwertig.

Anhand der gezeigten Adapter 100, 200 können auch typische DALI-Funktionen, wie beispielsweise Gruppenzuordnungen diverser Leuchten oder die Konfiguration von Lichtszenarien (z. B. Farbmischungen) bereitgestellt werden. Eine besonders einfache Lösung ist jedoch eine Lösung für eine einzelne Leuchte, in welcher der Adapter zur Ansteuerung einer einzigen zugeordneten Leuchte als DALI-Betriebsgerät ausgestaltet ist.

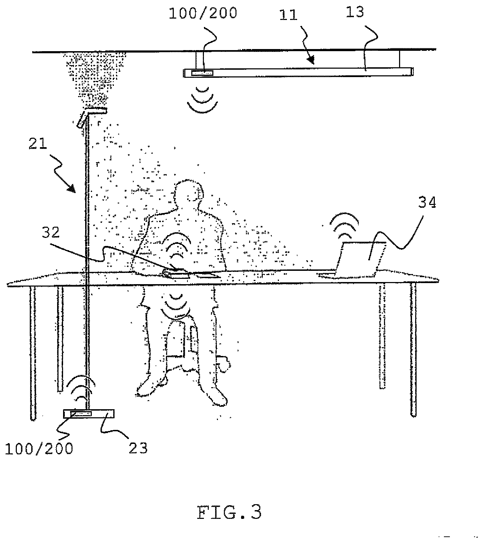

Fig. 3 zeigt eine Deckenleuchte 11 mit einem Leuchtengehäuse 13 sowie eine Standleuchte 21, beispielsweise gemäß Patentanmeldung DE 102007044065 der Fa. TRILUX, mit einem Leuchtengehäuse 23. Wie aus Fig. 3 ersichtlich, ist das Adaptergehäuse 150, 250 derart kompakt ausgeführt, dass es in die Leuchtengehäuse 13 oder einen Leuchtenfuß 23 integriert werden kann. Dementsprechend werden Abmessungen des Adaptergehäuses 150, 250 bevorzugt, welche für Leuchtenkomponenten gängig sind und beispielsweise auch für EVGs verwendet werden. Eine bevorzugte Abmessung des Adaptergehäuses 150, 250 ist ca. 21mm x 30mm x 80mm (Höhe x Breite x Länge). Typischerweise wird das Adaptergehäuses 150, 250 in Schutzklasse IP20 ausgeführt und die Adapter 100, 200 werden mit Schutzkleinspannung betrieben. Zur EMV wird die Antenne 112, 212 bevorzugt von außen an das Adaptergehäuse 150, 250 angeschlossen. Die Adapter 100, 200 ermöglichen die unmittelbare Fernbedienung der Leuchten 11, 21 mittels handelsüblicher Endgeräte, wie beispielsweise eines Smartphones 32 oder eines Netbooks 34 wie in Fig. 3 gezeigt. Solche Endgeräte 32, 34 sind typischerweise WLAN- oder WPAN-fähig.

Weiterhin eignen sich die Adapter 100, 200 auch zur Bildung eines Netzwerks zur Steuerung mehrerer, insbesondere einer Vielzahl, von Leuchten. Die Adapter 100, 200 können entsprechend programmiert sein, um automatisch ein entsprechendes Steuerungsnetzwerk zu generieren, indem sich die Adapter 100, 200 gegenseitig erkennen und beeinflussen. Hierdurch kann insbesondere bei Nachrüstung bereits vorhandener Leuchten 11, 21 das Verlegen der für einen DALI-Bus benötigten Verkabelung vermieden werden. So lässt sich anhand der Adapter 100, 200 eine Raumsteuerung generieren, welche die gesamte Beleuchtung im Raum via DALI bereitstellen und welche auch über gängige Smartphones bedient werden kann. Der oder die erforderlichen Adapter 100, 200 können hierzu entweder jeweils in die Leuchten 11, 21 integriert sein oder aber separat im Raum installiert werden. Zur Erzeugung einer Raumsteuerung sind verschiedene Ausführungen möglich, bspw.:
Ansatz 1: mit einem und dem gleichen Adapter 100, 200 als DALI Steuerungsgerät ("DALI-Controller") können mehrere über DALI-Bus angeschlossene Leuchten als Betriebsgerät ("DALI-Slave") angesteuert werden. So können zum Adapter 100, 200 nachträglich neue oder bereits vorhandene Leuchten hinzugefügt werden. Die Steuerung der Betriebsgeräte erfolgt nach DALI und Einstellung bzw. Bedienung des DALI Steuerungsgerät über den Server 130, 230, bspw. mittels Webseite.
Ansatz 2: Durch geeignete Programmierung ist, insbesondere bei WLAN-DALI Ausführung nach FIG.1, das Zusammenfassen mehrerer Adapter 100, 200 in ein Netzwerk zu einem gemeinsamen System (Master-Slave) möglich. Zwischen allen Adaptern 100, 200 kann eine Master/Slave Einstellung erfolgen, bspw. manuelle über Webseite oder automatisch per Zuweisungs-Routine. Die Bedienung erfolgt dann nur noch über einen als Steuerungsgerät definierten Adapter 100, 200, d.h. den "Master", dem die weiteren Adapter 100, 200, d.h. die "Slaves" folgen.
Ansatz 3: Durch geeignete Software kann eine "virtuelle" Zentralsteuerung ("Host") realisiert werden, bspw. in einem funknetzwerkfähigen herkömmlichen Rechner des IP-Netzwerks, welche die vorhandenen funknetzwerkfähigen Adapter 100, 200 insgesamt als "virtuelle" IP-Endgeräte über Funk adressiert und ansteuert. So kann bspw. eine Art Adapter-Netzwerk, gebildet werden aus mehreren WLAN-DALI Adaptern 100. Zentrales Steuern mehrerer WLAN-DALI Adaptern 100 ermöglicht die Hostsoftware mittels direkter Adressierung der einzelnen Adapter bzw. deren DALI Adressen.

Es wird bevorzugt eine übergeordnete Anbindung zum Internet eingesetzt, um Fernwartung per Internet zu ermöglichen. Bei geeigneter Ausführung des Servers 130, 230 ist auch die Verwendung von IP Sensorik und IP Interfaces (z.B. Bedienstellen, Fernbedienungen, Webseiten, Software, ...) möglich. Dies gilt insbesondere bei Ausführung mit WLAN-Modul 110 und HTTP-Server 130 nach FIG.1.

Auch die bei DALI gängige Gruppeneinteilung ist bei Einrichtung eines solchen Netzwerks verschiedener Adapter 100, 200 ohne Weiteres möglich. In einer einfacheren Ausführung kann die vorgesehene Software im Server 130, 230 oder aber die APP des Endgeräts 32, 34 eines Benutzers alle im Netzwerk vorhandenen Adapter 100, 200 erkennen und eine Gruppeneinteilung manuell erlauben oder aber automatisch ausführen.

Für den Fachmann ist ersichtlich, dass der Schutzbereich und der Gedanke der Erfindung nicht nur auf eine Leuchte insgesamt beschränkt ist, sondern auch auf den Adapter 100, 200 an und für sich abstellt, welcher beispielsweise als Nachrüstsatz für bestehende Leuchten oder bereits installierte Leuchten angeboten werden kann.

Abschließend werden unabhängig von den zuvor beschriebenen Ausführungsbeispielen und ganz allgemein weitere Vorteile und Eigenschaften des Adapters erwähnt bzw. wiederholt.

Es ist zur Kommunikation mit dem Adapter aufgrund des integrierten Servers, insbesondere bei Verwendung eines integrierten Webservers, weder eine gesonderte Software noch eine Verbindung zum Internet nötigt. Der Adapter kann selbst und autonom über seinen integrierten Server eine für herkömmliche Mobilkommunikationsgeräte unmittelbar zugängliche Benutzerschnittstelle, insbesondere eine Webseite, zur Verfügung stellen. In Abgrenzung zu bekannten Systemen vereint der vorgeschlagene Adapter alle hierzu erforderlichen Komponenten, insbesondere DALI Steuergerät, WPAN-Modul und Webserver, in einem einzigen Modul mit geringer Baugröße.

Der Adapter kann die bestimmungsgemäßen Funktionen zudem auch ohne unmittelbar angeschlossene Leuchte, bspw. als Master-Steuerungszugang, bereitstellen. Mittels seiner DALI Steuerfunktionalität kann ein Adapter mehrere Leuchten ansteuern, z.B. bis zu 64 Leuchten. Die elektronische Ansteuerung der Leuchten erfolgt über DALI, die Bedienung durch den Benutzer jedoch über den Server, welcher ein deutlich weiter verbreitetes Kommunikationsprotokoll nutzt um die Benutzerschnittstelle, insbesondere ein Webinterface, bereit zu stellen.

Bei Verwendung von mindestens zwei Adaptern kann eine DALI Verbindung drahtlos realisiert werden, insbesondere über WLAN. Abgesehen von einer möglichen Systemadministrierung, ist hierzu kein externes Gerät, inbesondere kein Mobilkommunikationsgerät nötig. So können mittels mehreren Adaptern, welche beispielsweise paarweise als Funk-Brücken dienen, größere DALI-Steuernetzwerke mit deutlich geringerem Verdrahtungsaufwand als bisher aufgebaut werden.

Mit dem Adapter kann über das Internet, gegebenenfalls über eine Einbindung in ein WLAN/WPAN, auch eine Leuchtenfernwartung bzw. Fernsteuerung von außerhalb der Reichweite des bzw. der eingebetteten Funk-Netzwerkmodule erfolgen. So kann von Außerhalb ein Setzten von DALI Kommandos oder auch eine Abfrage des Leuchtenstatus über DALI erfolgen.

Mehrere Nutzer können gleichzeitig auf einen Adapter bzw. das durch diesen bereitgestellte Web-Interface zugreifen. Eine Kollisionsvermeidung kann einfach dadurch erzielt werden, dass stets der zuletzt eingegebene Wert zur Geltung (LTP: Latest Takes Precedence) kommt und nach Aktualisierung der Webseite allen Nutzern angezeigt wird. Über einen simplen Passwortschutz kann der Zugang zu den Leuchten für bestimmte Nutzer erlaubt bzw. verweigert werden. Über einen durch den Server bereitgestellten Administrator-Zugang kann eine Einstellung erfolgen, z.B. mittels Funktionen die bereits von WLAN-Routern bekannt sind.

Der Adapter ermöglicht auch das Nachrüsten älterer DALIfähiger Leuchten. Der Adapter kann muss jedoch nicht innerhalb des Gehäuses der Leuchte platziert werden. Die kleine Bauform des Adaptergehäuses erlaubt als auch den Adapter in Schaltschränken, unter Putz oder in einer Deckenverkleidung zu platzieren.

### Bezugszeichenliste

### FIG.1

- 100: Adapter
- 110: WLAN-Modul
- 112: Funk-Antenne
- 120: Recheneinheit
- 122: DALI-Steuergerät (Mikroprozessor)
- 130: HTTP-Server
- 140: Anschlussklemmen
- 142: DALI-Bus
- 144: Spannungsversorgung
- 146: Sensor
- 148: Taster
- 150: Adaptergehäuse

### FIG.2

- 200: Adapter
- 210: WPAN-Modul
- 212: Funk-Antenne
- 220: Recheneinheit
- 222: DALI-Steuergerät (Mikroprozessor)
- 230: APP-Server
- 240: Anschlussklemmen
- 242: DALI-Bus
- 244: Spannungsversorgung
- 246: Sensor
- 248: Taster
- 250: Adaptergehäuse

### FIG. 3

- 11: Deckenleuchte
- 21: Standleuchte
- 13: Leuchtengehäuse
- 23: Leuchtenfuß
- 32: Smartphone
- 34: Netbook
- 100/200: Adapter

## Patentansprüche

1. Leuchte (11, 21) mit Adapter zur Steuerung der Leuchte, wobei der Adapter (200):
ein im Adapter (200) eingebettetes Funk-Netzwerkmodul (210) zur drahtlosen Kommunikation über eine integrierte oder extern angeschlossene Funkantenne (212);
eine im Adapter (200) eingebettete Recheneinheit (220) zur Leuchten-Steuerung gemäß einer AutomatisierungsSchnittstelle (DALI); und
mindestens einen elektrischen Anschluss (242) zur Leuchten-Steuerung anhand der Recheneinheit umfasst;
**dadurch gekennzeichnet, dass** der Adapter
einen integrierten Server (230) für eine Benutzerschnittstelle zur Steuerung der Leuchte über das FunkNetzwerkmodul (210) umfasst;
dass Recheneinheit (220) und Server (230) derart programmiert sind, dass die Leuchte (11, 21) anhand der Benutzerschnittstelle bedienbar ist; und
das Funk-Netzwerkmodul als WPAN-Modul (210) gemäß IEEE 802.15 oder Bluetooth® ausgebildet ist und der Server (230) zur Kommunikation mit einer adapterspezifischen Anwendung, insbesondere einer Smartphone-Anwendung (APP), über das WPAN-Modul (210) ausgestaltet ist.

2. Leuchte mit Adapter nach Anspruch 1, **dadurch gekennzeichnet, dass** das WPAN-Modul (210) als Bluetooth® Access Point gemäß IEEE 802.15 Standard, ausgebildet ist.

3. Leuchte mit Adapter nach Anspruch 1 oder 2, **dadurch gekennzeichnet, dass** die Recheneinheit (220) als DALI-Steuergerät bzw. DALI-Gateway, insbesondere gemäß IEC 62386, ausgebildet ist und vorzugsweise zur Steuerung mehrerer DALI-Betriebsgeräte.

4. Leuchte mit Adapter nach einem der Ansprüche 1 bis 3, wobei der Adapter (200) weiterhin Anschlüsse (240) umfasst für eine oder mehrere externe Steuervorrichtungen einschließlich eines externen Lichtsensors (246), **dadurch gekennzeichnet, dass** die Recheneinheit (220) programmiert ist zur Berechnung eines Stellwerts für die Helligkeitsregelung und zur Ausgabe dieses Stellwerts als Steuerbefehl über die AutomatisierungsSchnittstelle, wobei der Stellwert vorzugsweise auf Grundlage eines über den Lichtsensor (246) ermittelten Istwerts und eines über die Benutzerschnittstelle vorgebbaren Sollwerts berechnet wird.

5. Leuchte mit Adapter nach einem der vorhergehenden Ansprüche, **dadurch gekennzeichnet, dass**
die Recheneinheit (220) sowohl zur Leuchten-Steuerung gemäß DALI als auch als Server, insbesondere als APP-Server (230), programmiert ist; oder
die Recheneinheit (220) zur Leuchten-Steuerung gemäß DALI programmiert ist und der Server, insbesondere als APP-Server (230), im Funk-Netzwerkmodul (210) integriert ist.

6. Adapter (200) zur Steuerung einer Leuchte, umfassend:
ein Adaptergehäuse (250);
ein im Adaptergehäuse integriertes Funk-Netzwerkmodul, zur drahtlosen Kommunikation über eine integrierte oder extern angeschlossene Funkantenne (212);
eine im Adaptergehäuse integrierte Recheneinheit (220) programmiert zur Leuchten-Steuerung gemäß einer Automatisierungs-Schnittstelle, insbesondere gemäß DALI (Digital Addressable Lighting Interface);
mindestens einen elektrischen Anschluss (242) zur Leuchten-Steuerung anhand der Recheneinheit;
**dadurch gekennzeichnet dass** der Adapter einen integrierten Server (230) für eine Benutzerschnittstelle zur Leuchten-Steuerung über das FunkNetzwerkmodul (210) umfasst; dass
Recheneinheit (220) und Server (230) derart programmiert sind, dass eine Leuchten-Steuerung anhand der Benutzerschnittstelle ermöglicht wird; und
das Funk-Netzwerkmodul als WPAN-Modul (210) gemäß IEEE 802.15 oder Bluetooth® Standard ausgebildet ist und der Server (230) zur Kommunikation mit einer adapterspezifischen Anwendung, insbesondere einer Smartphone-Anwendung (APP), über das WPAN-Modul (210) ausgestaltet ist.

7. Adapter (200) zur Steuerung einer Leuchte nach Anspruch 6, **dadurch gekennzeichnet, dass** das WPAN-Modul (210) als Bluetooth® Access Point gemäß IEEE 802.15 Standard, ausgebildet ist.

8. Adapter (200) zur Steuerung einer Leuchte nach Anspruch 6, **dadurch gekennzeichnet, dass** die Recheneinheit (220) sowohl zur Leuchten-Steuerung gemäß DALI als auch als Server programmiert ist; oder die Recheneinheit (220) zur Leuchten-Steuerung gemäß DALI programmiert ist und der Server im FunkNetzwerkmodul (210) integriert ist.

9. Adapter nach Anspruch 6, **dadurch gekennzeichnet, dass** sowohl das Funknetzwerkmodul (210), als auch der Server (230) und eine DALI-Steuerung in die Recheneinheit (220) integriert sind.

10. Adapter (200) zur Steuerung einer Leuchte nach Anspruch 6 bzw. Leuchte nach Anspruch 1, **dadurch gekennzeichnet, dass** das bzw. ein Adaptergehäuse (250) Abmessungen von Höhe x Breite x Länge kleiner gleich 25mm x 36mm x 100 mm, vorzugsweise Abmessungen von ca. 21mm x 30mm x 80mm, aufweist und in ein Leuchtengehäuse (13, 23) integrierbar ist bzw. in das Leuchtengehäuse integriert ist.

11. Netzwerk zur Steuerung mehrerer Leuchten (11, 21) umfassend mindestens zwei Adapter (200) nach Anspruch 6.

12. Netzwerk zur Leuchtensteuerung umfassend mindestens zwei Adapter (200) nach Anspruch 6 und ferner umfassend mindestens ein tragbares Funk-Netzwerk-Endgerät (30, 40), vorzugsweise ein WPAN-fähiges Smartphone (30).

13. Netzwerk nach Anspruch 10, wobei die mindestens zwei Adapter (200) eingerichtet sind um lichttechnische Steuerinformationen, insbesondere DALI Steuerinformationen, drahtlos über ihre jeweiligen Funk-Netzwerkmodule zu übertragen.

14. Verwendung des Adapters (200) nach einem der Ansprüche 6 bis 9 zum Fernbedienen einer Leuchte (11, 21) mittels eines tragbaren Funk-Netzwerk-Endgeräts, vorzugsweise mittels eines WPAN-fähigen Smartphones.

## Claims

1. Luminaire (11, 21) with adapter for controlling the luminaire, wherein the adapter (200) comprises:
a wireless network module embedded in the adapter (200) for wireless communication via an integrated or externally connected wireless antenna (212);
a processing unit (220) embedded in the adapter (200) for lighting control according to an automation interface (DALI); and
at least one electric connection (242) for lighting control by means of the processing unit, and
**characterized in that** the adapter comprises
an integrated server (230) for a user interface enabling control of the luminaire via the wireless network module (210) ;
**in that** the processing unit (220) and the server (230) are programmed such that the luminaire (11, 21) can be operated via the user interface; and
the radio network module is configured as WPAN module (210) in accordance with IEEE 802.15 or Bluetooth® and the server (230) is configured for communication with an adapter-specific application, in particular with a smartphone application (APP), via the WPAN module (210).

2. Luminaire with adapter according to claim 1, **characterized in that** the WPAN module (210) is configured as Bluetooth® Access Point in accordance with an IEEE 802.15 standard.

3. Luminaire with adapter according to claim 1 or 2, **characterized in that** the processing unit (220) is configured as a DALI control unit or DALI gateway, in particular in accordance with IEC 62386, and preferably for controlling a plurality of DALI control gear devices.

4. Luminaire with adapter according to one of claims 1 to 3, wherein the adapter (200) further comprises connectors (240) for one or more external control devices including an external light sensor (246), **characterized in that** the processing unit (220) is programmed to calculate a control value for brightness control and for outputting this control value as a control command via the automation interface, the control value being preferably calculated based on an actual value determined by the light sensor (246) and based on an setpoint that is pre-definable via the user interface.

5. Luminaire with adapter according to one of the preceding claims, **characterized in that**
the processing unit (220) is programmed both for lighting control according to DALI and as a server, in particular as an APP server (230); or
the processing unit (220) is programmed for lighting control in accordance with DALI and the server is integrated, in particular as an APP server (230), in the wireless network module (210).

6. Adapter (200) for controlling a luminaire, the adapter comprising:
an adapter housing (250);
a wireless network module, which is integrated in the adapter housing, for wireless communication via an integrated or externally connected wireless antenna (212);
a processing unit (220), which is integrated in the adapter housing and is programmed for luminaire control in accordance with an automation interface, in particular in accordance with DALI (Digital Addressable Lighting Interface);
at least one electric connection (242) for luminaire control by means of the processing unit;
**characterized in that** the adapter comprises an integrated server (230) for a user interface enabling control of the luminaire via the wireless network module (210) ;
**in that** the processing unit (220) and the server (230) are programmed so as to enable luminaire control via the user interface; and
the radio network module is configured as WPAN module (210) in accordance with an IEEE 802.15 or Bluetooth® standard and the server (230) is configured for communication with an adapter-specific application, in particular with a smartphone application (APP), via the WPAN module (210).

7. Adapter (200) for luminaire control according to claim 6,
**characterized in that**
the WPAN module (210) is configured as Bluetooth® Access Point in accordance with an IEEE 802.15 standard.

8. Adapter (200) for luminaire control according to claim 6,
**characterized in that**
the processing unit (220) is programmed both for lighting control according to DALI and as a server; or
the processing unit (220) is programmed for lighting control in accordance with DALI and the server on the other hand is integrated in the wireless network module (210).

9. Adapter (200) according to claim 6, **characterized in that** both the wireless network module (210) and the server (230) as well as a DALI-control are integrated in the processing unit (220).

10. Adapter (200) for luminaire control according to claim 6 or luminaire according to claim 1, **characterized in that** the or an adapter housing (250) has dimensions height x width x length that are less than or equal 25mm x 36mm x 100 mm, preferably dimensions of about 21mm x 30mm x 80mm, and can be integrated into or are integrated into a luminaire housing (13, 23).

11. Network for controlling a plurality of luminaires (11, 21) comprising at least two adapters (200) according to claim 6.

12. Network for luminaire control comprising at least two adapters (200) according to claim 6 and further comprising at least one portable wireless network end device (30, 40), preferably a WPAN-enabled smartphone (30).

13. Network according to claim 10, wherein the at least two adapters (200) are configured for transmitting lighting related control information, in particular DALI control information, in wireless manner via their respective radio network modules.

14. Use of the adapter (100, 200) according to any one of claims 6 to 9 for remote control of a luminaire (11, 21) by means of a portable wireless network end device, preferably WPAN-enabled a smartphone.

## Revendications

1. Luminaire (11, 21) avec un adaptateur destiné à commander le luminaire, l'adaptateur (200) comprenant:
un module de réseau sans fil embarqué dans l'adaptateur (200) pour une communication sans fil via une antenne sans fil intégrée ou externe (212);
une unité de traitement (220) embarquée dans l'adaptateur (200) pour commander l'éclairage selon une interface d'automatisation (DALI); et
au moins une connexion électrique (242) pour commander l'éclairage au moyen de l'unité de traitement,
**caractérisé en ce que** l'adaptateur comprend
un serveur intégré (230) pour une interface utilisateur permettant une commande à distance via le module de réseau sans fil (210);
**en ce que** l'unité de traitement (220) et le serveur (230) sont programmés de telle sorte que le luminaire (11, 21) peut être commandé via l'interface utilisateur et
le module de réseau sans fil est configuré en tant que module WPAN (210) conforme à la norme IEEE 802.15 ou Bluetooth® et le serveur (230) est conçu pour communiquer avec une application spécifique à l'adaptateur, en particulier avec une application pour smartphone (APP), via le module WPAN (210).

2. Luminaire avec adaptateur selon la revendication 1, **caractérisé en ce que** le module WPAN (210) est configuré comme point d'accès Bluetooth® selon la norme IEEE 802.15.

3. Luminaire avec adaptateur selon la revendication 1 ou 2, **caractérisé en ce que** l'unité de traitement (220) est configurée comme unité de commande DALI ou passerelle DALI, en particulier selon CEI 62386, et de préférence pour commander une pluralité de ballasts électroniques du type DALI.

4. Luminaire avec adaptateur selon l'une quelconque des revendications 1 à 3, dans lequel l'adaptateur (200) comprend en outre des connexions (240) pour un ou plusieurs dispositifs de commande externes comprenant un capteur de lumière externe (246), **caractérisé en ce que** l'unité de traitement (220) est programmée pour calculer une valeur de consigne pour le contrôle de luminosité et pour délivrer cette valeur de consigne en tant que commande via l'interface d'automatisation, la valeur de consigne étant de préférence calculée sur base d'une valeur réelle déterminée par le capteur de lumière (246) et d'une consigne prédéfinissable via l'interface utilisateur.

5. Luminaire avec adaptateur selon l'une des revendications précédentes, **caractérisé en ce que**
l'unité de traitement (220) est programmée à la fois pour la commande de l'éclairage selon DALI et en tant que serveur, en particulier en tant que serveur APP (230); ou
l'unité de traitement (220) d'une part est programmée pour la commande de l'éclairage selon DALI et le serveur d'autre part est intégré, en particulier en tant que serveur APP (230), dans le module de réseau sans fil (210).

6. Adaptateur (200) pour commander un luminaire, comprenant:
un boîtier d'adaptateur (250);
un module de réseau sans fil, qui est intégré dans le boîtier d'adaptateur, pour une communication sans fil via une antenne sans fil intégrée ou externe (212);
une unité de traitement (220) intégrée dans le boîtier d'adaptateur et programmée pour commander le luminaire selon une interface d'automatisation, en particulier conformément au protocole DALI (Digital Addressable Lighting Interface);
au moins une connexion électrique (242) pour commander le luminaire au moyen de l'unité de traitement;
**caractérisé en ce que** l'adaptateur comprend
un serveur intégré (230) pour une interface utilisateur permettant de commander le luminaire via le module de réseau sans fil (210);
**en ce que** l'unité de traitement (220) et le serveur (230) sont programmés de telle sorte que le luminaire peut être commandé via l'interface utilisateur; et
le module de réseau sans fil est configuré en tant que module WPAN (210) conforme à la norme IEEE 802.15 ou Bluetooth® et le serveur (230) est conçu pour communiquer avec une application spécifique à l'adaptateur, en particulier avec une application pour smartphone (APP), via le module WPAN (210).

7. Adaptateur (200) pour commande d'un luminaire, selon la revendication 6, **caractérisé en ce que** le module WPAN (210) est configuré comme module Bluetooth® selon la norme IEEE 802.15, en particulier comme point d'accès Bluetooth® selon la norme IEEE 802.15.

8. Adaptateur (200) pour commande d'un luminaire, selon la revendication 6, **caractérisé en ce que**
l'unité de traitement (220) est programmée à la fois pour la commande de l'éclairage selon DALI et en tant que serveur; ou
l'unité de traitement (220) d'une part est programmée pour la commande de l'éclairage selon DALI et le serveur d'autre part est intégré dans le module de réseau sans fil (210).

9. Adaptateur (200) selon la revendication 6, **caractérisé en ce qu'**aussi bien le module de réseau sans fil (210) que le serveur (230) ainsi qu'une commande selon DALI sont intégrés dans l'unité de traitement (220).

10. Adaptateur (200) pour commande d'un luminaire, selon la revendication 6 ou luminaire selon la revendication 1, **caractérisé en ce que** le resp. un boîtier adaptateur (250) a des dimensions hauteur x largeur x longueur qui sont inférieures ou égales à 25 mm x 36 mm x 100 mm, de préférence des dimensions d'environ 21mm x 30mm x 80mm, et peut être intégré dans un boîtier de luminaire (13, 23) resp. qui est intégré dans un boîtier de luminaire (13, 23).

11. Réseau pour commander une pluralité de luminaires (11, 21) comprenant au moins deux adaptateurs (200) selon la revendication 6.

12. Réseau pour la commande de luminaires comprenant au moins deux adaptateurs (200) selon la revendication 6 et comprenant en outre au moins au moins un appareil portable sans fil (30, 40), de préférence un smartphone (30) avec fonctionnalité WPAN.

13. Réseau selon la revendication 10, dans lequel les au moins deux adaptateurs (200) sont configurés pour transmettre de l'information de commande d'éclairage, en particulier de l'information de commande DALI, de manière sans fil via leur module de réseau sans fil respectif.

14. Utilisation de l'adaptateur (100, 200) selon l'une quelconque des revendications 6 à 9 pour la commande à distance d'un luminaire (11, 21) au moyen d'un un appareil portable sans fil, de préférence d'un smartphone avec fonctionnalité WPAN.
